Europäisches Patentamt

European Patent Office

Office européen des brevets

(11) Publication number: **0 492 650 A2**

## EUROPEAN PATENT APPLICATION

(21) Application number: **91122295.8**

(22) Date of filing: **27.12.91**

(51) Int. Cl.5: **G02B 27/28**

(30) Priority: **25.12.90 JP 405772/90**

(43) Date of publication of application:
**01.07.92 Bulletin 92/27**

(84) Designated Contracting States:
**DE FR GB**

(71) Applicant: Oki Electric Industry Co., Ltd.
**7-12, Toranomon 1-chome Minato-ku
Tokyo(JP)**

(72) Inventor: **Tamura, Yasuaki, c/o Oki Electric
Industry Co. Ltd
7-12, Toranomon 1-chome
Minato-ku, Tokyo(JP)**

(74) Representative: **Betten & Resch
Reichenbachstrasse 19
W-8000 München 5(DE)**

(54) **Device for aligning planes of polarization.**

(57) A device for aligning a plane of polarization
includes a birefringent crystal plate (3) and a polariz-
ing filter plate (4). A beam of an incident linearly
polarized light (7) having any direction of polarization
is launched from an incident side optical fiber (1)
and introduced through an incident side collimator
(2) into the birefringent plate (3), which in turn splits
the incident beam into two beams of light component linearly polarized (9, 10) and propagating in
respective directions substantially perpendicular to
each other. The two beams (9, 10) are introduced
into the polarizing filter plate (4) and only a compo-
nent of light linearly polarized is extracted that has a
direction of polarization corresponding to the direc-
tion (20) in which light is passed and polarized in the
polarizing filter plate (4). This is outputted to an
output side optical fiber (6) through an output side
collimator lens (5).

FIG.3

EP 0 492 650 A2

## BACKGROUND OF THE INVENTION

### Field of the Invention

The present invention relates to a device for aligning planes of polarization for use in elements and parts for optical telecommunications.

### Description of the Prior Art

Among devices and modules for optical telecommunications, there are many such devices that do not work effectively until the direction in which an incident light thereto is polarized can be restricted in one way or another. Examples of such devices or modules include optical amplifiers using semiconductor lasers and optical telecommunications modules for use in coherent transmission systems.

In order to meet this requirement, i.e., to restrict or control the direction of polarization of incident light, there has been conventionally adopted a method in which a polarization plane controller is provided immediately before or upstream the aforementioned devices or modules, or a method involving polarization diversity.

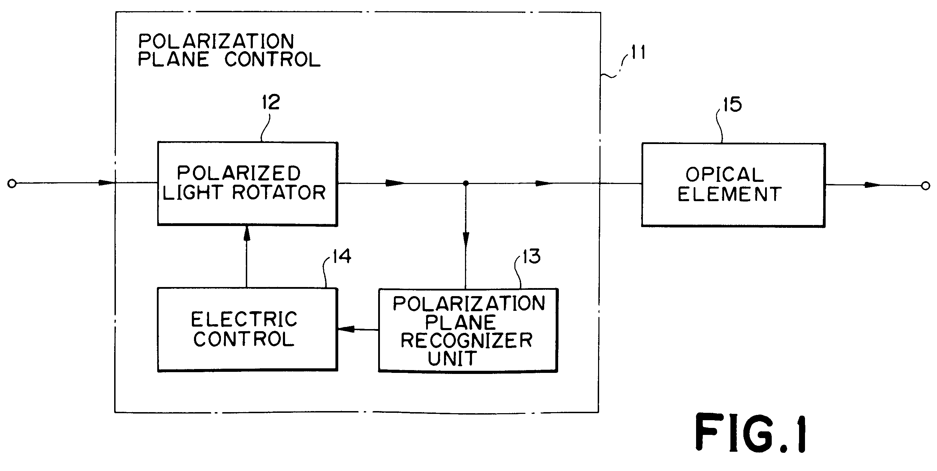

FIG. 1 is a schematic block diagram illustrating how to connect a polarization plane controlling device to an optical system. A polarization plane control 11 converts a light having any desired plane of polarization into a light having a certain or predetermined polarization plane. This method enables an output light from the polarization plane control 11 to be kept always in the predetermined plane of polarization. Hence, an optical element 15 having a function of polarized light dependence may be connected to downstream of the polarization plane control 11 so that the optical element 15 can exhibit its function effectively.

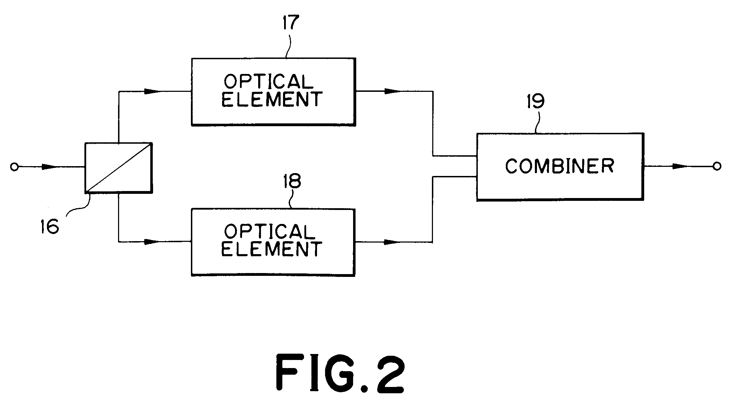

Further, FIG. 2 is a block diagram schematically illustrating an example of the polarization diversity method, see ECOC, '89, September 1989, pp.62-65. According to this method, a beam of incident light having any desired plane of polarization can be spatially split into two beams in respective planes of polarization which are perpendicular to each other by using a polarization separator 16, which separates the two beams propagating in respective fixed planes of polarization. Output or emergent beams from the separator 16 are communicated with respective polarized light dependent optical elements 17 and 18, from which the output beams are optically or electrically combined together by combiner 19. This method allows the polarized light dependent optical elements or parts 17 and 18 to operate in response to the intensities of the respective component beams.

However, the aforementioned methods are disadvantageous as described below. As illustrated in FIG. 2, the method using a polarization plane controller requires a polarization plane recognizer unit 13 for monitoring the state of polarization of an incident beam, an electric control 14 for producing electric signals for controlling the state of polarization of the incident beam in response to the result of monitoring, and a polarized light rotator 12 for sending the electric signals to the optical system so as to adjust the state of polarization of the incident beam. Thus, the method essentially uses a feed back loop (optical to electrical, and electrical to optical again) so that it fails to cope with abrupt change of plane of polarization on the incident light side. Use of the electrical and optical systems not only increases the sizes of the devices or modules used but also makes their structure much more complicated.

The method utilizing polarization diversity requires two kinds of systems, i.e., optical and electrical systems, in two sets, which makes the construction complicated and increases the size and cost. Furthermore, the condition that the two optical systems must be equivalent leads to a further requirement that an accessory system is needed in order to maintain the equivalency of the two optical systems. If the balance in characteristics, e.g., temperature characteristics, between the two optical systems is destroyed, there will be exhibited no effective function of polarized light-independence, resulting in the occurrence of factors for instabilized operation. In order to make the characteristics of the two optical systems equivalent to each other, it is necessary to arrange two optical functional elements having equivalent characteristics to each other as a pair. This also results in increase in the size of the device and in cost.

## SUMMARY OF THE INVENTION

Accordingly, an object of the present invention is to obviate the aforementioned defects involved in the prior art and provide a device for aligning planes of polarization which transmits a beam of incident light having a plane of polarization in any or unrestricted direction to an output side in the form of an emergent beam always with a plane of polarization having a predetermined or fixed direction.

In order to achieve the aforementioned object of the present invention, a device for aligning planes of polarization is provided, which comprises a birefringent crystal plate for splitting a beam of an incident linearly polarized light incident thereon into two beams of light components linearly polarized with respective directions of polarization substantially perpendicular to each other, the birefringent crystal plate having respective optic axis; and a polarizing filter plate allowing one of the two beams of light component linearly polarized to pass therethrough in a direction of polarization, the one beam of light component linearly polarized having a predetermined direction of polarization.

Here, in an aspect of the invention, the birefringent crystal plate may be arranged so that the optic axis is deviated from a direction of the beams of the incident light. The polarizing filter plate may be arranged so that the direction of polarization of the polarizing filter plate is at an angle of 45° with respect to a direction of polarization of the two beams of light component linearly polarized.

In accordance with a further aspect of the present invention, the birefringent crystal plate and the polarizing filter plate may be integrate with each other.

The device in accordance with the present invention may further comprise a polarized-light dependent element optically connected to an output side of the polarizing filter plate.

Incident linearly polarized lights with any direction of polarization can be split into two beams of light component linearly polarized which are substantially perpendicular to each other by means of the birefringent crystal plate. The two split beams of linearly polarized lights are introduced into the polarizing filter plate, and only one component having a direction of polarization which corresponds to a direction of passing polarized light of the filter plate is extracted and outputted. As a result, linearly polarized lights having any directions of polarization can be converted into a linearly polarized light having a predetermined direction of polarization.

The present invention makes the construction of the device for aligning planes of polarization simpler, reduces the size and cost of the device. Further, in the present invention, a control system which is mandatory in the conventional polarization plane controller becomes unnecessary, thus avoiding a problem of delay in response time which could otherwise occur in the control system. In addition, it is sufficient that the birefringent crystal plate and the polarizing filter plate be inserted in an optical system and no adjustment is necessary for optical connection or coupling, thus making the handling of the device easy.

Other objects, advantages and effects will be apparent from the following description with reference to the accompanying drawings.

## BRIEF DESCRIPTION OF THE DRAWINGS

FIG. 1 is a schematic block diagram useful for understanding a conventional method of controlling a plane of polarization;

FIG. 2 is a schematic block diagram useful for understanding a conventional polarization diversity method of controlling a plane of polarization;

FIG. 3 is a schematic side view showing a device for aligning a plane of polarization according to a preferred embodiment of the present invention;

FIGS. 4A, 4B and 4C are schematic illustrations of operation of the device shown in FIG. 3;

FIG. 5 is a schematic side view, similar to FIG. 3, of a device for aligning a plane of polarization according to an alternative embodiment of the present invention;

FIG. 6 is a schematic side view, similar to FIG. 5, showing a device for aligning a plane of polarization according to a further alternative embodiment of the present invention; and

FIG. 7 is a schematic side view, similar to FIG. 6, illustrating a device for aligning a plane of polarization according to a still further alternative embodiment of the present invention.

## DESCRIPTION OF PREFERRED EMBODIMENTS

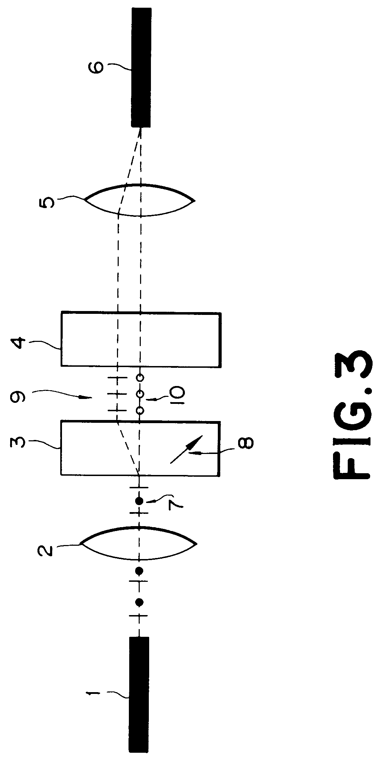

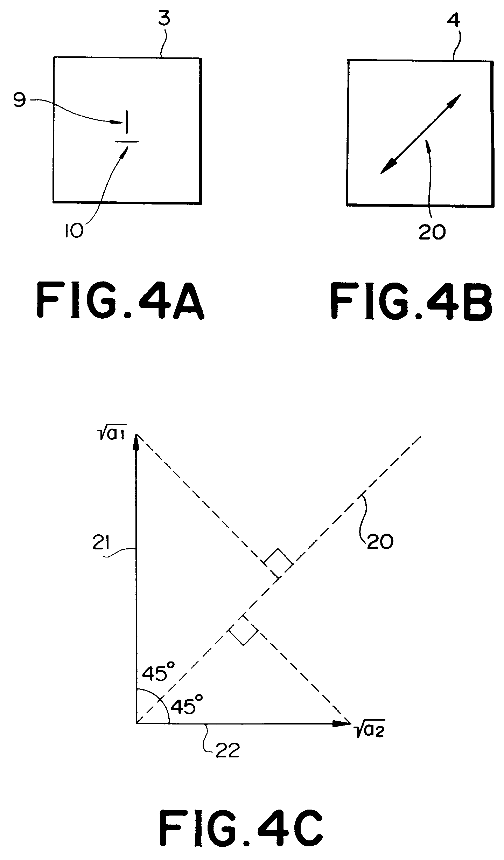

Hereinafter, the present invention will be described in more detail by embodiments. Referring to FIGS. 3 and 4, a preferred embodiment of the present invention will be described. FIG. 3 is a schematic side view of a device for aligning a plane of polarization according to a preferred embodiment of the present invention. As shown in FIG. 3, the device includes an incident side optical fiber 1, an incident side collimator lens 2, a flat plate 3 of birefringent crystal, a polarizing filter plate 4, an output side collimator lens 5 made of calcite, for example, and an output side optical fiber 6.

As is well known, the birefringent crystal plate 3 is anisotropic in its refractive index, and hence an output light therefrom behaves uniquely depending on azimuth of crystal axis, direction of incident beam and the like. For simplicity, it is assumed that the birefringent crystal plate 3 is arranged in a line along which an optical beam passes from the incident side optical fiber 1 to the output side optical fiber 6 so that an incident beam 7 can enter the plate 3 at an angle of about 45 angular degrees (°) with respect to an optic axis 8 of the crystal plate 3. The polarizing filter plate 4 is arranged in such a manner that the direction in which light is passed and polarized in the polarizing filter plate 4 is rotated at an angle of 45° on the optic axis with respect to a plane including thereon two parallel optical beams 9 and 10 outputted from the birefringent crystal plate 3. The output beam from the incident side optical fiber 1 is coupled to the birefringent crystal plate 3 through the incident side collimator lens 2 while the output light from the polarizing filter plate 4 is coupled to the output side optical fiber 6 through the output side collimator 5.

The device operates in the fashion read as follows. Beams of a linearly polarized light are launched from the incident side optical fiber 1 and converted to substantially parallel beams by the incident side collimator lens 2, and then enters in the birefringent crystal plane 3.

As described above, the birefringent crystal plate 3 is arranged such that the optic axis 8 of the crystal in the plate 3 is deviated from or does not correspond to the direction of incident beam 7 (for example, crossing at an angle of about 45° with the instance shown in FIG. 1), and as a result the incident beam 7 is split into a couple of beams 9 and 10 having respective planes of polarization which are substantially perpendicular to each other by the effect of the birefringent crystal plate 3. Since the birefringent crystal plane 3 has major surfaces which are substantially parallel to each other, the two output beam 9 and 10 are launched parallel to each other. Hence, the two output beams 9 and 10 have respective planes of polarization substantially perpendicular to each other and propagate in the same direction parallely. FIG. 4A illustrates directions of polarization of the two beams, i.e., linearly polarized lights 9 and 10, as seen from the surface of the birefringent crystal plate 3. The two linearly polarized lights 9 and 10 are then introduced into the polarizing filter plate 4.

As noted above, a direction 20, FIG. 4A, in which light is passed and polarized in the polarizing filter plate 4 is slanted about the optic axis of the birefringent crystal plate 3 at an angle of 45° with respect to each of the directions of the linearly polarized lights 9 and 10 launched from the birefringent crystal plate 3, as indicated in FIG. 4B. As a result, of the linearly polarized lights 9 and 10, only those components thereof that are in the direction 20 of light transmission and polarization can transmit through the polarizing filter plate 4 and outputted therefrom.

Referring to FIG. 4C, the operation of the polarizing filter plate 4 will be described in more detail. Assuming letters $a_1$ and $a_2$ stand for the intensities of the linearly polarized lights 9 and 10, respectively, components of the lights 9 and 10 in the direction 20 may be given by the following equation:

$$(\sqrt{a_1} \cos 45°)^2 + (\sqrt{a_2} \cos 45°)^2 = 1/2 (a_1 + a_2)$$

where $a_1 + a_2 = $ constant.

As can be seen from the above equation, although the intensity of the output light from the polarizing filer plate 4 is reduced to a half of the intensity of the light incident on the birefringent crystal plate 3, it is constant regardless of the state of the plane of polarization on which lights are incident.

Turning now to FIG. 3, the two beams of linearly polarized lights from the polarizing filter plate 4 are passed through the output side collimator lens 5 and coupled to the output side optical fiber 6. Here, since the two beams are spaced at a given distance from each other, it is necessary that the two beams can actually be connected to the output side optical fiber 6 with an acceptable light transmission loss. This condition can be met when the two light beams are substantially parallel to each other and distance therebetween is reasonably small. In this embodiment, those two requirements have been met as discussed below.

First, so far as the birefringent crystal plate 3 is a flat plate, the couple of output beams are substantially parallel to each other. Second, the distance between the two output beams depends on the thickness of the birefringent crystal plate 3. For example, calcite or rutile crystal is used for the plate 3 with the distance between the output beams being about 1/10 of the thickness of the birefringent crystal plate 3. Thus, when the thickness of the birefringent crystal plate 3 is set to 0.1 millimeter (mm), the distance between the output beams is 0.01 mm. In this case, connection deterioration between the optical fibers is almost negligible. This relationship is described in Journal of Lightwave Technology, Vol. LT-4, No.7, (July 1986) pp.841-845.

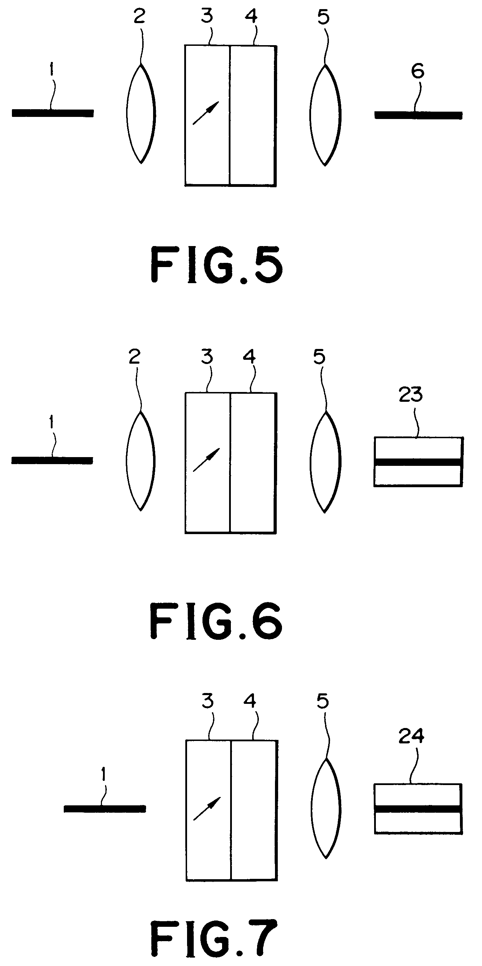

FIG. 5 is a schematic side view of a device for aligning a plane of polarization according to an alternative embodiment of the present invention. The construction of the device according to this embodiment is different from that shown in FIG. 1 in that the birefringent crystal plate 3 and the polarizing filter plate 4 are integrate with each other. More particularly, the birefringent crystal plate 3 and the polarizing filter plate 4 are arranged with adjusting the relative positions thereof by rotating the crystal plate 3 as described above in respect of the embodiment shown FIG. 1, and boded to each other to integrate them to form the arrangement as shown in FIG. 5. This integration allows the device to be handled as one block thus facilitating its handling.

FIG. 6 is also a schematic side view of a device for aligning a plane of polarization according to a third alternative embodiment of the present invention. In this embodiment, a polarized light-dependent semiconductor device 23, such as a travelling-wave semiconductor laser chip, or a polarized light-dependent optical element 23, such as an optical waveguide, an optical isolator, etc., is used in place of the output side optical fiber 6 included in the embodiment shown in FIG. 5.

FIG. 7 is another schematic side view showing a device for aligning a plane of polarization according to a still alternative embodiment of the present invention. In this embodiment, the incident side optical fiber 1 is connected to a polarized light dependent optical part 24 through a single lens 5. In this case, a block which has a birefringent crystal plate 3 and a polarizing filter plate 4 integrated therein in the same manner as in the embodiment shown in FIG. 5 is inserted between the incident side optical fiber 1 and the output side collimator lens 5, thus simplifying the construction.

The invention has been described in detail with respect to the specific embodiments, and it will now be apparent from the foregoing to those skilled in the art that changes and modifications may be made without departing from the invention in its broader aspects.

**Claims**

1. A device for aligning a plane of polarization CHARACTERIZED BY
   a birefringent crystal plate (3) for splitting a beam of a linearly polarized, incident light (7) incident thereon into two beams of light component linearly polarized (9, 10) and propagating in respective directions substantially perpendicular to each other, said birefringent crystal plate (3) having an optic axis (8); and
   a polarizing filter plate (4) allowing one of said two beams of light component linearly polarized (9, 10) to pass therethrough in a direction of polarization, said one beam of light component linearly polarized having a predetermined direction of polarization (20).

2. A device in accordance with claim 1, CHARACTERIZED IN THAT
   said birefringent crystal plate (3) is arranged so that said optic axis is deviated from said direction of said beams of incident light (7),
   said polarizing filter plate (4) being arranged so that said direction of polarization of said polarizing filter plate (4) is at an angle of 45° with respect to a direction of polarization of said two beams of light component linearly polarized (9, 10).

3. A device in accordance with claim 1, CHARACTERIZED IN THAT said birefringent crystal plate (3) and said polarizing filter plate (4) are integrate with each other.

4. A device in accordance with claim 1, CHARACTERIZED BY a polarized light-dependent element (23, 24) optically connected to an output side of said polarizing filter plate (4).

EP 0 492 650 A2

POLARIZATION
PLANE CONTROL

11

12

POLARIZED
LIGHT ROTATOR

15

OPICAL
ELEMENT

14

ELECTRIC
CONTROL

13

POLARIZATION
PLANE
RECOGNIZER
UNIT

# FIG.1

FIG.2

EP 0 492 650 A2

EP 0 492 650 A2

FIG.3

8

FIG.4A

FIG.4B

FIG.4C

# FIG.5

# FIG.6

# FIG.7